# EUROPEAN PATENT APPLICATION

(11) **EP 4 444 004 A1**
(43) Date of publication of application: **09.10.2024**
(21) Application number: 22906643.6
(22) Date of filing: 15.12.2022
(51) Int. Cl.: H04W 72/04

(54) **UPLINK TRANSMISSION METHOD AND APPARATUS, NETWORK NODE AND STORAGE MEDIUM**

(30) Priority: 15.12.2021 CN 202111535363
(71) Applicant: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: ZHENG, Yi, Beijing 100053 (CN); LIU, Yongchang, Beijing 100053 (CN); WANG, Fei, Beijing 100053 (CN)
(74) Representative: J A Kemp LLP
(86) International application number: PCT/CN2022/139275
(87) International publication number: WO 2023/109898

(57) **Abstract**

Disclosed in the present application are an uplink transmission method and apparatus, a terminal and a storage medium. The method comprises: a first terminal determining a first slot; the first slot representing a slot available for a transmission or repetition transmissions of a PUSCH; and the number of symbols available for the first slot being greater than or equal to the number of symbols indicated for each transmission or repetition transmissions.

## Description

### CROSS-REFERENCE TO RELATED APPLICATION

This application is filed based on and claims priority to Chinese Patent application No. 202111535363.1, filed on December 15, 2021, the content of which is hereby incorporated by reference in its entirety.

### TECHNICAL FIELD

The disclosure relates to the field of wireless technologies, and in particular to a method, an apparatus and a network node for uplink transmission and a storage medium.

### BACKGROUND

In the related art, type A of Physical Uplink Shared Channel (PUSCH) repetition transmission type A (repetition type A) adopts a consecutive slot-based manner. That is, a terminal is configured to perform K times of retransmissions on K consecutive slots. This manner will cause that the number of actual repetition transmissions is far less than the number of repetition transmissions configured by a network side, and the efficiency of uplink transmission is poor.

### SUMMARY

To solve the technical problem in the related art, embodiments of the disclosure provide a method, an apparatus and a network node for uplink transmission and a storage medium.

The technical solutions of the disclosure are implemented as follows.

An embodiment of the disclosure provides a method for uplink transmission, which is applied to a first terminal and includes the following operation.

First slot(s) is determined.

Each first slot represents an available slot for PUSCH transmission or PUSCH repetition transmission, and the number of available symbol(s) of the first slot is greater than or equal to the number of symbol(s) indicated for each transmission or each repetition transmission.

An embodiment of the disclosure further provides an apparatus for uplink transmission, which includes a first determination unit.

The first determination unit is configured to determine first slot(s).

Each first slot represents an available slot for PUSCH transmission or PUSCH repetition transmission, and the number of available symbol(s) of the first slot is greater than or equal to the number of symbol(s) indicated for each PUSCH transmission or each PUSCH repetition transmission.

An embodiment of the disclosure further provides a first terminal, which includes a first processor and a first communication interface.

The first processor is configured to determine first slot(s).

Each first slot represents an available slot for PUSCH transmission or PUSCH repetition transmission, and the number of available symbol(s) of the first slot is greater than or equal to the number of symbol(s) indicated for each PUSCH transmission or each PUSCH repetition transmission.

An embodiment of the disclosure further provides a first terminal, which includes a first processor and a first memory for storing a computer program capable of running on a processor.

The first processor is configured to perform operations of any method mentioned above when running the computer program.

An embodiment of the disclosure provides a storage medium storing a computer program. When the computer program is executed by a processor, operations of any method mentioned above are implemented.

In the embodiments of the disclosure, the PUSCH transmission or the PUSCH repetition transmission is configured by using the available slot, and the first terminal determines a slot in which the number of available symbol(s) is greater than or equal to the number of symbol(s) indicated for each transmission, or a slot in which the number of available symbol(s) is greater than or equal to the number of symbol(s) indicated for each repetition transmission, as the first slot available for the PUSCH transmission or the PUSCH repetition transmission. Based on this, the PUSCH transmission or the PUSCH repetition transmission is performed, which avoids the case in which the number of actual transmissions or actual repetition transmissions is far less than the number of transmissions or repetition transmissions configured by the network side, thereby improving the efficiency of uplink transmission.

### BRIEF DESCRIPTION OF THE DRAWINGS

FIG. 1 is a schematic diagram illustrating a frame structure in the related art.
FIG. 2 is a flowchart illustrating a method for uplink transmission according to an embodiment of the disclosure.
FIG. 3 is a structural diagram of apparatus for uplink transmission according to an embodiment of the disclosure.
FIG. 4 is a structural diagram of a first terminal according to an embodiment of the disclosure.

### DETAILED DESCRIPTION

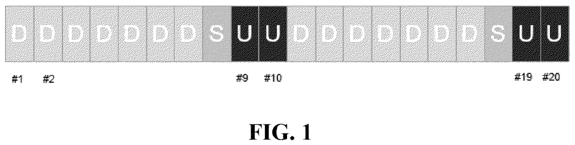

In the related art, PUSCH repetition type A adopts a consecutive slot-based manner. That is, a terminal is configured to perform K times of retransmissions on K consecutive slots. Specifically, the number of retransmissions is configured as 16, for a frame structure of Time Division Duplexing (TDD) (for example, 7D1S2U), e.g., a frame structure that each frame is configured with 7 downlink sub-frames, 1 special sub-frame and 2 uplink sub-frames, 16 times of retransmissions cover one subframe and six slots. Referring to FIG. 1, when one sub-frame and six slots both contain two uplink slots respectively, the number of retransmissions that can actually be performed is 4. When the number of retransmissions is configured as 32, the number of retransmissions that can actually be performed is 8. That is, the consecutive slot-based manner will cause that the number of actual retransmissions is far less than the number of retransmissions configured by a network side, and the efficiency of uplink transmission is poor.

Based on this, in a method, an apparatus and a terminal for uplink transmission and a storage medium provided by the embodiments of the disclosure, an available slot manner is used, and a first terminal determines a slot in which the number of available symbol(s) is greater than or equal to the number of symbol(s) indicated for each transmission, or a slot in which the number of available symbol(s) is greater than or equal to the number of symbol(s) indicated for each repetition transmission, as the first slot available for the transmission or the repetition transmission of PUSCH. Based on this, the transmission or the repetition transmission of the PUSCH is performed, which avoids the case in which the number of actual transmissions or actual repetition transmissions is far less than the number of transmissions or repetition transmissions configured by the network side, thereby improving the efficiency of uplink transmission.

The disclosure will be further described in detail below in combination with the drawing and the embodiment.

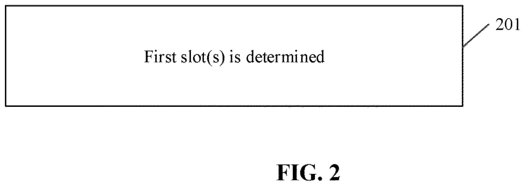

An embodiment of the disclosure provides a method for uplink transmission, as illustrated in FIG. 2. The method includes the following operation.

At operation 201, first slot(s) is determined.

Each first slot represents an available slot for PUSCH transmission or PUSCH repetition transmission. The number of available symbol(s) of the first slot is greater than or equal to the number of symbol(s) indicated for each transmission or each repetition transmission.

In the related art, there is a lack of relevant definitions and processing methods for the available slot. For the definition of the available slot, the following considerations need to be made in principle: whether to consider including a flexible slot, and whether to consider the change of the flexible slot, more specifically, whether to consider RRC configuration information (for example, uplink slot configuration information and downlink slot configuration information), whether to consider a Slot Format Indication (SFI) and the like. In view of the above considerations, in the embodiments of the disclosure, the number of available symbol(s) being greater than or equal to the number of symbol(s) indicated for each transmission or each repetition transmission is used as a basic criterion for determining the available slot(s), thereby ensuring that available resource of the determined available slot(s) may meet the transmission or the repetition transmission of the PUSCH.

In a practical application, the first terminal determines the first slot(s) based on configuration information of the TDD. The configuration information of the TDD includes, but is not limited to, tdd-UL-DL-ConfigurationCommon and/or tdd-UL-DL-ConfigurationDedicated. Further, when considering the available resource of available slot(s), the first terminal does not consider the following symbols as the available resource of the available slot(s). That is, the available symbol(s) do not include: a symbol carrying a type 0-Physical Downlink Control Channel (PDCCH) Common Search Space (type 0-PDCCH CSS), and/or a flexible symbol carrying a Synchronization Signal Block (SSB).

In a practical application, determining the first slot(s) based on the configuration information of the TDD includes the following two cases:

Case 1: the first slot(s) and the available resource of the first slot(s) are determined based on uplink slot(s) and uplink symbol(s) indicated in the configuration information of the TDD.

That is, only uplink slot(s) and uplink symbol(s) are considered as available resource of available slot(s).

Case 2: the first slot(s) and the available resource on the first slot(s) are determined based on uplink slot(s), uplink symbol(s), flexible slot(s) and flexible symbol(s) indicated by the configuration information of the TDD.

That is, in addition to considering uplink slot(s) and uplink symbol(s) as available resource of available slot(s), it is necessary to consider, when determining the available slot(s), whether to use flexible slot(s) and flexible symbol(s) as available resource of the available slot(s).

As mentioned above, the SFI is considered when determining the available slot(s). In an embodiment of the disclosure, the indication of the SFI may also be considered in two cases: one is that the indication of the SFI is not considered when determining the available slot(s), and the influence of the SFI is considered when processing conflicts with other configuration information subsequently; the other is that the indication of the SFI is considered when determining the available slot(s).

Herein, the SFI may be a slot format indication based on Downlink Control Information (DCI) format 2_0.

Next, in the case that the indication of the SFI is not considered when determining the available slot(s), the process of determining the available slot(s) is described in detail below.
1. For the Case 1 above (i.e., the first slot(s) and the available resource of the first slot(s) are determined based on the uplink slot(s) and the uplink symbol(s) indicated in the configuration information of the TDD): the first terminal may not consider the SFI when determining the available slot(s), that is, it is considered that the SFI does not affect the determination of the available slot(s).
2. For the Case 2 above (i.e., the first slot(s) and the available resource of the first slot(s) are determined based on the uplink slot(s), the uplink symbol(s), the flexible slot(s) and the flexible symbol(s) indicated by the configuration information of the TDD), the Case 2 is described in detail below.

Firstly, it is determined whether the corresponding slot is the first slot based on the uplink slot(s), the uplink symbol(s), the flexible slot(s) and the flexible symbol(s) indicated in the configuration information of the TDD. When the number of available symbol(s) in the corresponding slot is greater than or equal to the number of symbol(s) indicated for each PUSCH transmission or each PUSCH repetition transmission, that is, all of the symbol(s) indicated for each PUSCH transmission or each PUSCH repetition transmission are the uplink symbol(s) or the flexible symbol(s), and the symbol(s) indicated for each PUSCH transmission or each PUSCH repetition transmission are not occupied by other channels or signals and can be used for PUSCH transmission or PUSCH repetition transmission, this slot is determined as an available slot (i.e., the first slot), and the corresponding symbol(s) indicated for each PUSCH transmission or each PUSCH repetition transmission are determined as the available resource on the first slot.

Then, based on the determination of the first slot(s) described above, when the first terminal receives the first SFI, the first terminal may perform the following operations:

assuming that the first SFI does not affect the determination of the first slot(s) by the first terminal; and/or

not expecting that the first SFI changes the determination of the first slot(s) by the first terminal; and/or

in a case that the first SFI indicates flexible symbol(s) are updated to downlink symbol(s) and if uplink symbol(s) after updating and/or flexible symbol(s) after updating cannot meet PUSCH transmission or PUSCH repetition transmission, one repetition transmission is counted in for the corresponding first slot, and the PUSCH transmission or the PUSCH repetition transmission is not performed on the corresponding first slot; and/or

in a case that the first SFI indicates flexible symbol(s) are updated to downlink symbol(s) and if the uplink symbol(s) after updating and/or the flexible symbol(s) after updating cannot meet the PUSCH transmission or the PUSCH repetition transmission, the PUSCH transmission or the PUSCH repetition transmission is performed only on a part of resource.

The PUSCH transmission or the PUSCH repetition transmission cannot be met, which means that corresponding physical resources cannot meet the number of physical resources or the positions of physical resources indicated for the PUSCH transmission or PUSCH repetition transmission. The transmission is performed on a part of resource, which means that the transmission is performed on resource that does not overlap or is not conflict with other transmissions, or that is not occupied by the other transmissions.

For example, if the first SFI indicates that the flexible symbol(s) are uplink symbol(s) or the first SFI does not indicate any configuration to update, the first terminal determines that the SFI indicated by a base station does not change the first terminal's judgment on the available slot(s) and the available resource of the available slot(s), or the first terminal does not expect the SFI indicated by the base station to change the first terminal's judgment on the available slot(s) and available resource of the available slot(s). For another example, if the first SFI indicates that the flexible symbol(s) are updated to the downlink symbol(s), at this time the number of flexible symbol(s) available for uplink transmission is reduced, then if the uplink symbol(s) after updating and the flexible symbol(s) after updating can still meet the PUSCH transmission or the PUSCH repetition transmission, the first terminal still determines the corresponding slot as the first slot. If the uplink symbol(s) after updating and the flexible symbol(s) after updating cannot meet the PUSCH transmission or the PUSCH repetition transmission, the first terminal still determines the corresponding slot as the first slot, but does not perform the PUSCH transmission or the PUSCH repetition transmission on the first slot, but still counts in one repetition transmission for the first slot (i.e., adds 1 to the recorded number of repetition transmissions); or the first terminal performs the PUSCH transmission or the PUSCH repetition transmission on available symbol(s) of the first slot.

Next, the case that the indication of the SFI is considered when determining the available slot(s) is described in detail below.

In an embodiment, determining first slot(s) includes the following operations.

The first slot(s) and available resource of the first slot(s) are determined based on uplink slot(s) and uplink symbol(s) indicated by the configuration information of TDD and a second SFI; or the first slot(s) and available resource of the first slot(s) are determined based on uplink slot(s), uplink symbol(s), flexible slot(s) and flexible symbol(s) indicated by the configuration information of TDD and a second SFI.

The second SFI represents a last SFI received by the first terminal before receiving first Downlink Control Information (DCI). The first DCI is used for indicating PUSCH transmission or PUSCH repetition transmission.
1. For the Case 1 above, that is, only the uplink slot(s) and the uplink symbol(s) indicated in the configuration information of the TDD are considered.

Firstly, whether a corresponding slot is the first slot is determined based on the uplink slot(s) and the uplink symbol(s) indicated in the configuration information of the TDD and the uplink symbol(s) indicated by the second SFI. When the number of available symbol(s) in the corresponding slot is greater than or equal to the number of symbol(s) indicated for each PUSCH transmission or each PUSCH repetition transmission(i.e., all of the available uplink symbol(s) in the corresponding slot can be used for PUSCH transmission or PUSCH repetition transmission), the slot is determined as the available slot (i.e., the first slot), and the corresponding available uplink symbol(s) are determined as the available resource on the first slot.

Then, based on the determination of the first slot(s) described above, when the first terminal receives a third SFI after receiving the second SFI, the first terminal may perform the following operations: assuming that the third SFI does not change the determination of the first slot(s) by the first terminal; and/or not expecting that the third SFI changes the determination of the first slot(s) by the first terminal.

Further, in this case, the uplink symbol(s) indicated by the second SFI, including flexible symbol(s), indicated by the second SFI, to be updated as the uplink symbol(s), would not be updated as flexible symbol(s) or downlink symbol(s).

Alternatively, when the first terminal receives a third SFI after receiving the second SFI, in a case that the third SFI indicates that uplink symbol(s) indicated by the second SFI is updated to flexible symbol(s) or downlink symbol(s), if the uplink symbol(s) after updating and/or the flexible symbol(s) after updating cannot meet the PUSCH transmission or the PUSCH repetition transmission, the PUSCH transmission or the PUSCH repetition transmission is not performed on the corresponding first slot and one repetition transmission is counted in for the corresponding first slot; or the PUSCH transmission or the PUSCH repetition transmission is performed only on a part of resource.

The PUSCH transmission or the PUSCH repetition transmission of the cannot be met, which means that corresponding physical resources cannot meet the number of physical resources or the positions of physical resources indicated for the PUSCH transmission or PUSCH repetition transmission. The transmission is performed on a part of resource, which means that the transmission is performed on resource that does not overlap or is not conflict with other transmissions, or that is not occupied by the other transmissions.

That is, when the third SFI indicates that the uplink symbol(s) indicated by the second SFI are updated to flexible symbol(s) or downlink symbol(s), the number of flexible symbol(s) available for uplink transmission is reduced. If the uplink symbol(s) after updating and the flexible symbol(s) after updating cannot meet the PUSCH transmission or the PUSCH repetition transmission, then the first terminal still determines the corresponding slot as the first slot, but does not perform the PUSCH transmission or the PUSCH repetition transmission on the first slot, but still counts in one repetition transmission for the first slot (i.e., adds 1 to the recorded number of repetition transmissions); or the first terminal performs the PUSCH transmission or the PUSCH repetition transmission on available symbol(s) of the first slot.

2. For the case 2 above, that is, in addition to considering the uplink slot(s) and uplink symbol(s) indicated in the configuration information of the TDD, the flexible slot(s) and flexible symbol(s) indicated in the configuration information of the TDD are also considered.

Firstly, whether a corresponding slot is the first slot is determined based on the uplink slot(s), the uplink symbol(s), the flexible slot(s) and the flexible symbol(s) indicated in the configuration information of the TDD and the uplink symbol(s) indicated by the second SFI. When the number of available symbol(s) in the corresponding slot is greater than or equal to the number of symbol(s) indicated for each PUSCH transmission or each PUSCH repetition transmission(i.e., all of the available uplink symbol(s) and flexible symbol(s) in the corresponding slot can be used for uplink transmission or uplink repetition transmission), the slot is determined as the available slot (i.e., the first slot), and the corresponding available uplink symbol(s) and the flexible symbol(s) are determined as available resource of the first slot.

Then, based on the determination of the first slot(s) described above, when the first terminal receives a third SFI after receiving the second SFI, the first terminal may perform the following operations: assuming that the third SFI does not change the determination of the first slot(s) by the first terminal; and/or not expecting that the third SFI changes the determination of the first slot(s) by the first terminal.

Alternatively, when the first terminal receives a third SFI after receiving the second SFI, in a case that the third SFI indicates that uplink symbol(s) indicated by the second SFI is updated to flexible symbol(s) or downlink symbol(s), if the uplink symbol(s) after updating and/or the flexible symbol(s) after updating cannot meet the PUSCH transmission or the PUSCH repetition transmission, the PUSCH transmission or the PUSCH repetition transmission is not performed on the corresponding first slot and one repetition transmission is counted in for the corresponding first slot.

The PUSCH transmission or the PUSCH repetition transmission of the cannot be met, which means that corresponding physical resources cannot meet the number of physical resources or the positions of physical resources indicated for the PUSCH transmission or PUSCH repetition transmission. That is, since the third SFI updates the states of the symbol(s), the number of flexible symbol(s) available for uplink transmission is reduced, and the uplink symbol(s) after updating and flexible symbol(s) after updating cannot meet the indicated PUSCH transmission or the indicated PUSCH repetition transmission, then the first terminal still determines the corresponding slot as the first slot, but does not perform the PUSCH transmission or the PUSCH repetition transmission on the first slot, but still counts in one repetition transmission for the first slot (i.e., adds 1 to the recorded number of repetition transmissions); or the first terminal performs the PUSCH transmission or the PUSCH repetition transmission on the remained available resource.

In the related art, an indication of a Cancellation Indication (CI) can only be used for type B of repetition transmission (i.e., repetition type B), and the repetition type A cannot be cancelled by the indication of the CI. A condition for the CI to be valid is that the CI is to be sent before the corresponding PUSCH or the PDCCH scheduled for Sounding Reference Signal (SRS) transmission. However, the corresponding PUSCH transmission or the corresponding PUSCH repetition transmission may span a long time by using the method based on available slot(s). For example, for a frame structure of 7D1S2U, if the scheduling is based on the available slot(s), when the number of retransmissions is configured to be 16, the transmission PUSCH or the PUSCH repetition transmission may span 80 slots, and the corresponding scheduled or indicated PDCCH has been sent long ago. At this time, if the indication of the CI is still required to be transmitted before indication of the corresponding transmission, it is difficult to achieve.

Based on this, in an embodiment, the method further includes the following operations.

In a case that a first CI is received when performing the PUSCH transmission or the PUSCH repetition transmission based on the determined first slot(s), the corresponding PUSCH transmission or the corresponding PUSCH repetition transmission is cancelled and one repetition transmission is counted in for the corresponding PUSCH transmission or the corresponding PUSCH repetition transmission, or the PUSCH transmission or the PUSCH repetition transmission is performed only on a part of resource.

Cancelled resource indicated by the first CI overlaps with the PUSCH transmission or the PUSCH repetition transmission or overlaps with slot(s) of the corresponding PUSCH transmission or the corresponding PUSCH repetition transmission. In addition, the transmission being performed on a part of resource means that the transmission is performed on resource that does not overlap or is not conflict with other transmissions, or that is not occupied by other transmissions.

Here, when the terminal performs the PUSCH transmission or the PUSCH repetition transmission based on available slot(s), if the received CI indicates that the cancelled resource, including symbol(s) of time domain or Physical Resource Block(s) (PRB(s)) of frequency domain, overlaps with the corresponding PUSCH transmission or corresponding PUSCH repetition transmission, or overlaps with the slot(s) of the corresponding PUSCH transmission or corresponding PUSCH repetition transmission, then the corresponding PUSCH transmission or corresponding PUSCH repetition transmission is cancelled, but one repetition transmission is still counted in for the first slot (i.e., adds 1 to the recorded number of repetition transmissions), or the first terminal performs the corresponding PUSCH transmission or the corresponding PUSCH repetition transmission on the remained resource without overlapping.

In an embodiment, cancelled symbols indicated by the first CI include a first symbol, a second symbol and symbol(s) between the first symbol and the second symbol.

The first symbol represents a last symbol of received PDCCH carrying the first CI. The second symbol represents a first symbol after elapsing a processing time delay and a time offset.

That is, the first CI indicates the cancelled symbol(s), which starts from the last symbol of received PDCCH indication carrying the first CI, and ends at the first symbol after elapsing the processing delay and the time offset. In a practical application, an inconsistency of understanding between the base station and the terminal, which affects transmission efficiency, can be avoided by agreeing on symbol(s) indicated by the CI.

In an embodiment, PDCCH carrying the first CI indication does not need to be sent or received by the first terminal before first DCI. The first DCI is used for indicating the PUSCH transmission or the PUSCH repetition transmission.

In a practical application, many higher-priority transmissions are defined in a previous protocol. For example, an uplink downlink transmission manner or a downlink transmission manner of flexible slots is updated by the SFI, so it is necessary to further consider the impact of the update on the definition of the available slots, as well as the indication of the CI and the transmission relationship between the SRS and the available slots. Specifically, the SRS may be transmitted in a special slot and the SRS occupies the last several symbols of the special slot. Therefore, it is also necessary to consider how to deal with the transmission relationship between the SRS and the special slot.

Generally, when dealing with SRS, it is necessary to consider that the service transmission is a higher priority service aimed at Ultra-Reliable Low-Latency Communication (URLLC). Based on this, in an embodiment, a priority of the PUSCH transmission or the PUSCH repetition transmission is a high priority, and the method includes the following operations.

A third symbol, a fourth symbol and/or a fifth symbol are determined as available symbols when determining the first slot.

The third symbol represents a symbol in which a Sounding Reference Signal (SRS) can be configured or is configured. The fourth symbol represents a symbol indicated for the PUSCH transmission or the PUSCH repetition transmission, and a network side triggers the first terminal to send an aperiodic SRS on the fourth symbol. The fifth symbol represents a symbol indicated for the PUSCH transmission or the PUSCH repetition transmission, and a transmission of a periodic SRS and/or a semi-persistent SRS on the fifth symbol overlaps with the corresponding PUSCH transmission or corresponding PUSCH repetition transmission.

Here, when the priority of the PUSCH transmission or the PUSCH repetition transmission is the high priority (for example, the priority of the PUSCH transmission or the PUSCH repetition transmission is indicated as 1 (i.e., priority index 1)), or when the PUSCH transmission or the PUSCH repetition transmission is a service of higher priority (for example, a URLLC service), all potential symbols in which the SRS can be configured or is configured are considered to be capable of being used for the PUSCH transmission or PUSCH repetition transmission, and thus, when determining the available slot(s), the positions of SRS symbols are not considered, and it is determined that the PUSCH transmission or the PUSCH repetition transmission may be performed on the corresponding symbols. If the first terminal is triggered by the base station to send the aperiodic SRS on the symbol indicated for the PUSCH transmission or PUSCH repetition transmission, then the PUSCH transmission or the PUSCH repetition transmission is still performed on the corresponding symbol, and the first terminal does not send the aperiodic SRS on the corresponding symbol. If the transmission of the periodic SRS and/or semi-persistent SRS overlaps with the PUSCH transmission or the PUSCH repetition transmission, then the PUSCH transmission or the PUSCH repetition transmission is still performed on the corresponding resource.

In another embodiment, a priority of the PUSCH transmission or the PUSCH repetition transmission is a low priority, and the method includes the following operations.

When a network side triggers the first terminal to send an aperiodic SRS, and a symbol for sending the aperiodic SRS overlaps with a symbol indicated for the PUSCH transmission or the PUSCH repetition transmission, the corresponding PUSCH transmission or the corresponding PUSCH repetition transmission is cancelled and one repetition transmission is counted in for the corresponding PUSCH transmission or the corresponding PUSCH repetition transmission, or the PUSCH transmission or PUSCH repetition transmission is performed only on a part of resource.

Alternatively, when a transmission of a periodic SRS overlaps with the corresponding PUSCH transmission or the corresponding PUSCH repetition transmission, the corresponding PUSCH transmission or the corresponding PUSCH repetition transmission is performed.

The transmission being performed on a part of resource means that the transmission is performed on resource that does not overlap or is not conflict with other transmissions, or that is not occupied by other transmissions.

Here, when the priority of the PUSCH transmission or the PUSCH repetition transmission is the low priority (for example, the priority of the PUSCH transmission or the PUSCH repetition transmission is indicated as 0 (i.e., priority index 0)), or when the PUSCH transmission or the PUSCH repetition transmission is a service of lower priority (for example, an Enhanced Mobile Broadband (eMBB) service), in a first case, the first terminal considers that none of the symbols configured with the SRS are used for the PUSCH transmission or the PUSCH repetition transmission; in a second case, the first terminal does not consider that the SRS will affect the definition of the available slot(s), that is, all uplink symbols are available symbols even if SRS transmission is configured. Specifically, when the network side configures or indicates the PUSCH transmission or the PUSCH repetition transmission, and symbols indicated for the PUSCH transmission or PUSCH repetition transmission overlaps with symbols on which the first terminal, triggered by the network side, sends the aperiodic SRSs. In order to ensure the transmission of the Aperiodic-SRS (AP-SRS) of higher priority, the PUSCH transmission or the PUSCH repetition transmission is not performed on the corresponding symbols, but one repetition transmission is still counted in for the symbols (i.e., adds 1 to the recorded number of repetition transmissions); or the first terminal performs the PUSCH transmission or the PUSCH repetition transmission on the resource without overlapping. Alternatively, when the PUSCH transmission or the PUSCH repetition transmission overlaps with the transmission of the periodic SRS, the PUSCH transmission or the PUSCH repetition transmission is performed preferentially, that is, the periodic SRS is not sent.

In addition, in a practical application, if the periodic SRS cannot be sent for a long time due to the long duration of the PUSCH transmission or the PUSCH repetition transmission, the base station can trigger sending of an aperiodic SRS to obtain the channel state.

In an embodiment, a priority of the PUSCH transmission or the PUSCH repetition transmission is lower than a preset priority, and the method further the following operations.

A sixth symbol is determined as an available symbol when determining the first slot(s).

The sixth symbol represents a symbol in which a semi-persistent SRS is configured and is not activated.

Here, for the symbol configured with the semi-persistent SRS, if the semi-persistent SRS is not activated, the symbol is considered to be an available symbol for the PUSCH transmission or the PUSCH repetition transmission. If the corresponding semi-persistent SRS is activated, the symbol is not considered to be an available symbol for the PUSCH transmission or the PUSCH repetition transmission.

In an embodiment, the method further includes the following operations.

In a case that the semi-persistent SRS is activated when the PUSCH transmission or the PUSCH repetition transmission is performed on the sixth symbol, the PUSCH transmission or the PUSCH repetition transmission corresponding to the first slot is cancelled and one repetition transmission is counted in for the corresponding PUSCH transmission or PUSCH repetition transmission; or the PUSCH transmission or the PUSCH repetition transmission of the is performed on only a part of resource.

The transmission being performed on a part of resource means that the transmission is performed on resource that does not overlap or is not conflict with other transmissions, or that is not occupied by other transmissions.

If the corresponding semi-persistent SRS transmission has ended when performing the PUSCH transmission or the PUSCH repetition transmission, the available slot(s) determined by the first terminal are not affected when activating the semi-persistent SRS.

In the embodiment of the disclosure, the PUSCH transmission or the PUSCH repetition transmission is performed based on available slot(s), which avoids the case in which the number of actual transmissions or actual repetition transmissions is far less than the number of transmissions or repetition transmissions configured by the network side, for example, when 16 or 32 times of retransmissions are configured, 16 or 32 retransmission opportunities will actually be obtained, which greatly improves the efficiency of uplink transmission.

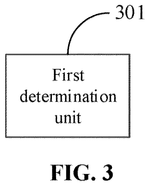

In order to implement the method of the embodiments of the disclosure, an embodiment of the disclosure further provides an apparatus for uplink transmission, which is arranged in the first terminal, as illustrated in FIG. 3, the apparatus includes a first determination unit 301.

The first determination unit 301 is configured to determine first slot(s).

Each first slot represents an available slot for PUSCH transmission or PUSCH repetition transmission, and a number of available symbol(s) of the first slot is greater than or equal to a number of symbol(s) indicated for each transmission or each repetition transmission.

In an embodiment, the available symbol(s) of the first slot exclude: a symbol carrying a type 0-PDCCH CSS and/or a flexible symbol carrying a SSB.

In an embodiment, the first determination unit 301 is configured to determine the first slot(s) and available resource of the first slot(s) based on uplink slot(s) and uplink symbol(s) indicated by configuration information of TDD.

In an embodiment, the first determination unit 301 is configured to determine the first slot(s) and available resource of the first slot(s) based on uplink slot(s), uplink symbol(s), flexible slot(s) and flexible symbol(s) indicated by configuration information of TDD.

In an embodiment, the apparatus further includes a conflict processing unit.

The conflict processing unit configured to: when receiving a first SFI, assume that the first SFI does not affect the determination of the first slot(s) by the first terminal; and/or not expect that the first SFI changes the determination of the first slot(s) by the first terminal; and/or in a case that the first SFI indicates flexible symbol(s) are updated to downlink symbol(s) and if uplink symbol(s) after updating and/or flexible symbol(s) after updating cannot meet PUSCH transmission or PUSCH repetition transmission, count in one repetition transmission for the corresponding first slot, and not perform the PUSCH transmission or the PUSCH repetition transmission on the corresponding first slot; and/or in a case that the first SFI indicates flexible symbol(s) are updated to the downlink symbol(s) and if the uplink symbol(s) after updating and/or the flexible symbol(s) after updating cannot meet the PUSCH transmission or the PUSCH repetition transmission, perform the PUSCH transmission or the PUSCH repetition transmission only on a part of resource.

In an embodiment, the first determination unit 301 is configured to: determine the first slot(s) and available resource of the first slot(s) based on uplink slot(s) and uplink symbol(s) indicated by configuration information of TDD and a second SFI; or determine the first slot(s) and available resource of the first slot(s) based on uplink slot(s), uplink symbol(s), flexible slot(s) and flexible symbol(s) indicated by configuration information of TDD and a second SFI.

The second SFI represents a last SFI received by the first terminal before receiving first DCI. The first DCI is used for indicating PUSCH transmission or PUSCH repetition transmission.

In an embodiment, the conflict processing unit is further configured to: in a case that the first terminal receives a third SFI after receiving the second SFI: assume that the third SFI does not change the determination of the first slot(s) by the first terminal; and/or not expect that the third SFI changes the determination of the first slot(s) by the first terminal.

In an embodiment, the conflict processing unit is further configured to: in a case that the first slot(s) and the available resource of the first slot(s) are determined based on the uplink slot(s) and the uplink symbol(s) in the uplink slot(s) indicated in the configuration information of the TDD and the second SFI: not update uplink symbol(s) indicated by the second SFI to flexible symbol(s) or downlink symbol(s).

In an embodiment, the conflict processing unit is further configured to: in a case that a third SFI indicates that uplink symbol(s) indicated by the second SFI is updated to flexible symbol(s) or downlink symbol(s), and if the uplink symbol(s) after updating and/or the flexible symbol(s) after updating cannot meet the PUSCH transmission or the PUSCH repetition transmission: not perform the PUSCH transmission or the PUSCH repetition transmission on the corresponding first slot, and count in one repetition transmission for the corresponding first slot; or perform the PUSCH transmission or the PUSCH repetition transmission only on a part of resource.

In an embodiment, the conflict processing unit is further configured to: in a case that a first cancellation indication (CI) is received when performing the PUSCH transmission or the PUSCH repetition transmission based on the determined first slot(s): cancel the corresponding PUSCH transmission or the corresponding PUSCH repetition transmission and count in one repetition transmission for the corresponding PUSCH transmission or the corresponding PUSCH repetition transmission; or perform the PUSCH transmission or the PUSCH repetition transmission only on a part of resource.

Cancelled resource indicated by the first CI overlaps with the corresponding PUSCH transmission or the corresponding PUSCH repetition transmission, or overlaps with slot(s) of the corresponding PUSCH transmission or the corresponding PUSCH repetition transmission.

In an embodiment, cancelled symbols indicated by the first CI comprises a first symbol, a second symbol and symbol(s) between the first symbol and the second symbol. The first symbol represents a last symbol of received PDCCH carrying the first CI, and the second symbol represents a first symbol after elapsing a processing delay and a time offset.

In an embodiment, PDCCH carrying the first CI does not need to be sent before first Downlink Control Information (DCI) or PDCCH carrying the first CI does not need to be or received by the first terminal before first DCI. The first DCI is used for indicating the PUSCH transmission or the PUSCH repetition transmission.

In an embodiment, a priority of the PUSCH transmission or the PUSCH repetition transmission is a high priority, and the first determination unit 301 is further configured to determine a third symbol, a fourth symbol and/or a fifth symbol as available symbol(s) when the first slot(s) is determined.

The third symbol represents a symbol in which a Sounding Reference Signal (SRS) can be configured or is configured. The fourth symbol represents a symbol indicated for the PUSCH transmission or the PUSCH repetition transmission and a network side triggers the first terminal to send an aperiodic SRS on the fourth symbol. The fifth symbol represents a symbol indicated for the PUSCH transmission or the PUSCH repetition transmission and a transmission of a periodic and/or a semi-persistent SRS on the fifth symbol overlaps with the corresponding PUSCH transmission or corresponding PUSCH repetition transmission.

In an embodiment, a priority of the PUSCH transmission or the PUSCH repetition transmission is a low priority, and the first determination unit 301 is further configured to:
when a network side triggers the first terminal to send an aperiodic Sounding Reference Signal (SRS), and a symbol for sending the aperiodic SRS overlaps with a symbol indicated for the PUSCH transmission or the PUSCH repetition transmission, cancel the corresponding PUSCH transmission or the corresponding PUSCH repetition transmission and count in one repetition transmission for corresponding PUSCH transmission or
corresponding PUSCH repetition transmission; or perform the PUSCH transmission or the PUSCH repetition transmission only on a part of resource.

Alternatively, the first determination unit 301 is further configured to: when a transmission of a periodic SRS overlaps with corresponding PUSCH transmission or corresponding PUSCH repetition transmission, perform corresponding PUSCH transmission or corresponding PUSCH repetition transmission.

In an embodiment, a priority of the PUSCH transmission or the PUSCH repetition transmission is a low priority; and the first determination unit 301 is configured to determine a sixth symbol as an available symbol.

The sixth symbol represents a symbol in which a semi-persistent SRS is configured and is not activated.

In an embodiment, the conflict processing unit is further configured to: in a case that the semi-persistent SRS is activated when the PUSCH transmission or the PUSCH repetition transmission is performed on the sixth symbol: cancel the corresponding PUSCH transmission or the corresponding PUSCH repetition transmission and count in one repetition transmission for the corresponding PUSCH transmission or the corresponding PUSCH repetition transmission; or perform the PUSCH transmission or the PUSCH repetition transmission of the only on a part of resource.

In a practical application, the first determination unit 301 and the conflict processing unit may be implemented by processors in apparatus for uplink transmission.

It should be noted that the apparatus for uplink transmission provided in the above embodiments only provide examples of the division of program modules during uplink transmission. In a practical application, the above processing may be assigned and completed by different program modules as needed. That is, the internal structure of the apparatus is divided into different program modules to complete all or part of the processing described above. In addition, the apparatuses and the methods for uplink transmission provided by the above embodiments belong to the same concept, and the specific implementation process of the apparatuses is detailed in the method embodiments, which will not be repeated here.

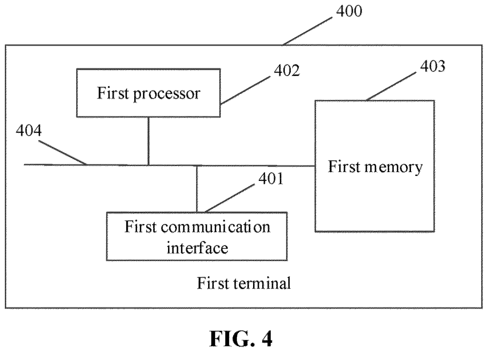

Based on a hardware implementation of the above program modules, and in order to implement the method at the first terminal side in the embodiment of the disclosure, an embodiment of the disclosure further provides a first terminal. As illustrated in FIG. 4, the first terminal 400 includes a first communication interface 401, a first processor 402, a first memory 403 and a bus system 404.

The first communication interface 401 is capable of interacting information with other network nodes.

The first processor 402 is connected is connected with the first communication interface 401 to realize information interaction with other network nodes, and is configured to perform the methods provided by one or more technical solutions at the first terminal side described above when running a computer program. The computer program is stored on the first memory 403.

Specifically, the first processor 402 is configured to determine first slot(s).

Each first slot represents an available slot for PUSCH transmission or PUSCH repetition transmission, and the number of available symbol(s) of the first slot is greater than or equal to the number of symbol(s) indicated for each transmission or each repetition transmission of the.

In an embodiment, the available symbol(s) of the first slot exclude: a symbol carrying a type 0-PDCCH CSS and/or a flexible symbol carrying a SSB.

In an embodiment, the first processor 402 is configured to determine the first slot(s) and available resource of the first slot(s) based on uplink slot(s) and uplink symbol(s) indicated by configuration information of TDD.

In an embodiment, the first processor 402 is configured to determine the first slot(s) and n available resource of the first slot(s) based on uplink slot(s), uplink symbol(s), flexible slot(s) and flexible symbol(s) indicated by configuration information of TDD.

In an embodiment, the first processor 402 is further configured to: when receiving a first SFI, assume that the first SFI does not affect the determination of the first slot(s) by the first terminal; and/or not expect that the first SFI changes the determination of the first slot(s) by the first terminal; and/or in a case that the first SFI indicates flexible symbol(s) are updated to downlink symbol(s) and if uplink symbol(s) after updating and/or flexible symbol(s) after updating cannot meet the PUSCH transmission or the PUSCH repetition transmission of the, count in one repetition transmission for the corresponding first slot, and not perform the PUSCH transmission or the PUSCH repetition transmission on the corresponding first slot; and/or in a case that the first SFI indicates flexible symbol(s) are updated to downlink symbol(s) and if the uplink symbol(s) after updating and/or the flexible symbol(s) after updating cannot meet the PUSCH transmission or the PUSCH repetition transmission, perform the PUSCH transmission or the PUSCH repetition transmission only on a part of resource.

In an embodiment, the first processor 402 is configured to: determine the first slot(s) and available resource of the first slot(s) based on uplink slot(s) and uplink symbol(s) indicated by configuration information of TDD and a second SFI; or determine the first slot(s) and available resource of the first slot(s) based on uplink slot(s), uplink symbol(s), flexible slot(s) and flexible symbol(s) indicated by configuration information of TDD and a second SFI.

The second SFI represents a last SFI received by the first terminal before receiving first DCI. The first DCI is used for indicating the PUSCH transmission or the PUSCH repetition transmission.

In an embodiment, the first processor 402 is further configured to: in a case that the first terminal receives a third SFI after receiving the second SFI: assume that the third SFI does not change the determination of the first slot(s) by the first terminal; and/or not expect that the third SFI changes the determination of the first slot(s) by the first terminal.

In an embodiment, the first processor 402 is further configured to: in a case that the first slot(s) and the available resource of the first slot(s) are determined based on the uplink slot(s) and the uplink symbol(s) in the uplink slot(s) indicated in the configuration information of the TDD and the second SFI: not update uplink symbol(s) indicated by the second SFI to flexible symbol(s) or downlink symbol(s).

In an embodiment, the first processor 402 is further configured to: in a case that a third SFI indicates that uplink symbol(s) indicated by the second SFI is updated to flexible symbol(s) or downlink symbol(s), and the uplink symbol(s) after updating and/or the flexible symbol(s) after updating cannot meet the PUSCH transmission or the PUSCH repetition transmission: not perform the PUSCH transmission or the PUSCH repetition transmission of on the corresponding first slot, and count in one repetition transmission for the corresponding first slot ; or perform the PUSCH transmission or the PUSCH repetition transmission only on a part of resource.

In an embodiment, the first processor 402 is further configured to: in a case that a first cancellation indication (CI) is received when performing the PUSCH transmission or the PUSCH repetition transmission based on the determined first slot(s), cancel the corresponding PUSCH transmission or the corresponding PUSCH repetition transmission and count in one repetition transmission for the corresponding PUSCH transmission or the corresponding PUSCH repetition transmission; or perform the PUSCH transmission or the PUSCH repetition transmission only on a part of resource.

Cancelled resource indicated by the first CI overlaps with the corresponding PUSCH transmission or the corresponding PUSCH repetition transmission, or overlaps with slots of the corresponding PUSCH transmission or the corresponding PUSCH repetition transmission.

In an embodiment, cancelled symbols indicated by the first CI comprises a first symbol, a second symbol and symbol(s) between the first symbol and the second symbol. The first symbol represents a last symbol of received PDCCH carrying the first CI, and the second symbol represents a first symbol after elapsing a processing delay and a time offset.

In an embodiment, PDCCH carrying the first CI does not need to be sent before first Downlink Control Information (DCI) or PDCCH carrying the first CI does not need to be or received by the first terminal before first DCI. The first DCI is used for indicating the PUSCH transmission or the PUSCH repetition transmission.

In an embodiment, a priority of the PUSCH transmission or the PUSCH repetition transmission is a high priority, and the first processor 402 is configured to: determine a third symbol, a fourth symbol and/or a fifth symbol as available symbol(s) when the first slot(s) is determined.

The third symbol represents a symbol in which a Sounding Reference Signal (SRS) can be configured or is configured. The fourth symbol represents a symbol indicated for the PUSCH transmission or the PUSCH repetition transmission, and a network side triggers the first terminal to send an aperiodic SRS on the fourth symbol. The fifth symbol represents a symbol indicated for the PUSCH transmission or the PUSCH repetition transmission, and a transmission of a periodic and/or a semi-persistent SRS on the fifth symbol overlaps with the corresponding PUSCH transmission or corresponding PUSCH repetition transmission.

In an embodiment, a priority of the PUSCH transmission or the PUSCH repetition transmission is a low priority, and the first processor 402 is further configured to: when a network side triggers the first terminal to send an aperiodic Sounding Reference Signal (SRS), and a symbol for sending the aperiodic SRS overlaps with a symbol indicated for the PUSCH transmission or the PUSCH repetition transmission: cancel the corresponding PUSCH transmission or the corresponding PUSCH repetition transmission and count in one repetition transmission for the corresponding PUSCH transmission or the corresponding PUSCH repetition transmission; or perform the PUSCH transmission or the PUSCH repetition transmission only on a part of resource.

Alternatively, the first processor 402 is further configured to: when a transmission of a periodic SRS overlaps with the corresponding PUSCH transmission or the corresponding PUSCH repetition transmission, perform the corresponding PUSCH transmission or the corresponding PUSCH repetition transmission.

In an embodiment, a priority of the PUSCH transmission or the PUSCH repetition transmission is a low priority; and the first processor 402 is configured to: determine a sixth symbol as an available symbol.

The sixth symbol represents a symbol in which a semi-persistent SRS is configured and is not activated.

In an embodiment, the first processor 402 is further configured to: in a case that the semi-persistent SRS is activated when the PUSCH transmission or the PUSCH repetition transmission is performed on the sixth symbol: cancel the corresponding PUSCH transmission or the corresponding PUSCH repetition transmission and count in one repetition transmission for the corresponding PUSCH transmission or the corresponding PUSCH repetition transmission; or perform the PUSCH transmission or the PUSCH repetition transmission of the only on a part of resource.

It should be noted that the specific processing processes of the first processor 402 and the first communication interface 401 can be understood with reference to the above methods.

In a practical application, the various components in the first terminal 400 are coupled together through the bus system 404. It should be understood that the bus system 404 is configured to implement connection communication between these components. The bus system 404 includes a power bus, a control bus and a status signal bus in addition to a data bus. However, the various buses are labeled as the bus system 404 in FIG. 4 for clarity.

The first memory 403 in the embodiments of the disclosure is configured to store various types of data to support the operation of the first terminal 400. Examples of these data include any computer program for operating on the first terminal 400.

The methods disclosed in the above embodiments of the disclosure may be applied to the first processor 402, or implemented by the first processor 402. The first processor 402 may be an integrated circuit chip with a signal processing capability. The operations of the above methods may be accomplished by an integrated logic circuit in the form of hardware in the first processor 402 or instructions in the form of software during the implementation. The first processor 402 described above may be a general processor, a Digital Signal Processor (DSP), or other programmable logic devices, a discrete gate or transistor logic device, a discrete hardware component, or the like. The first processor 402 may implement or perform the various methods, operations and logic blocks disclosed in the embodiments of the disclosure. The general processor may be a microprocessor or any conventional processor or the like. The operations of the methods disclosed in the embodiments of the disclosure may be directly executed and completed by a decoding processor in the form of hardware or by a combination of the hardware in the decoding processor and software modules. The software modules may be located in a storage medium in the first memory 403, and the first processor 402 reads information in the first memory 403 and completes the operations of the above methods in combination with hardware thereof.

In an exemplary embodiment, the first terminal 400 may be implemented by one or more Application Specific Integrated Circuits (ASICs), DSPs, Programmable Logic Devices (PLDs), Complex Programmable Logic Devices (CPLDs), Field-Programmable Gate Arrays (FPGAs), general processors, controllers, Micro Controller Units (MCUs), microprocessors, or other electronic elements, to perform the above methods.

It should be understood that the first memory 403 in embodiments of the disclosure may be a volatile memory, a non-volatile memory, or include both the volatile memory and the non-volatile memory. The non-volatile memory may be a Read-Only Memory (ROM), a Programmable ROM (PROM), an Erasable PROM (EPROM), an Electrically EPROM (EEPROM), a Ferromagnetic Random Access Memory (FRAM), a flash memory, a magnetic surface memory, an optical disc, or a Compact Disc ROM (CD-ROM). The magnetic surface memory may be a magnetic disk memory or a magnetic tape memory. The volatile memory may be a Random Access Memory (RAM), which serves as an external cache. By way of illustration but not limitation, many forms of RAMs are available, such as a Static RAM (SRAM), a Synchronous SRAM (SSRAM), a Dynamic RAM (DRAM), a Synchronous DRAM (SDRAM), a Double Data Rate SDRAM (DDRSDRAM), an Enhanced SDRAM (ESDRAM), a SyncLink DRAM (SLDRAM), a Direct Rambus RAM (DRRAM). The memories described in the embodiments of the disclosure are intended to, but are not limited to, include these and any other suitable types of memories.

In an exemplary embodiment, an embodiment of the disclosure further provides a storage medium, i.e., a computer storage medium, specifically a computer-readable storage medium, including, for example, the first memory 403 for storing a computer program. The computer program may be executed by the first processor 402 in the first terminal 400 to complete the operations of methods at the first terminal side described above. The computer-readable storage medium may be a memory, such as a FRAM, a ROM, a PROM, an EPROM, an EEPROM, a flash memory, a magnetic surface memory, an optical disk, or a CD-ROM, etc.

It should be noted that the "first", "second" and the like are used to distinguish similar objects, rather than describing a specific order or sequence.

Herein, the term "and/or" is only an association relationship that describes associated objects and represents that three relationships may exist. For example, A and/or B may represent three conditions: independent existence of A, existence of both A and B and independent existence of B. In addition, the term "at least one" used herein usually represents any one of multiple, or any combination of at least two of multiple. For example, including at least one of A, B and C may represent including any one or more elements selected from a set consisting of A, B and C.

In addition, the technical solutions described in the embodiments of the disclosure may be arbitrarily combined without conflicting with each other.

The above descriptions are only preferred embodiments of the disclosure and are not intended to limit the scope of protection of the disclosure.

## Claims

1. A method for uplink transmission, applied to a first terminal, the method comprising:
determining first slot(s), wherein
each first slot represents an available slot for Physical Uplink Shared Channel (PUSCH) transmission or PUSCH repetition transmission, and a number of available symbol(s) of the first slot is greater than or equal to a number of symbol(s) indicated for each transmission or each repetition transmission.

2. The method of claim 1, wherein the available symbol(s) of the first slot exclude:
a symbol carrying a type 0-Physical Downlink Control Channel (PDCCH) Common Search Space (type 0-PDCCH CSS); and/or
a flexible symbol carrying a Synchronization Signal Block (SSB).

3. The method of claim 1 or 2, wherein determining the first slot(s) comprises:
determining the first slot(s) and available resource of the first slot(s) based on uplink slot(s) and uplink symbol(s) indicated by configuration information of Time Division Duplexing (TDD).

4. The method of claim 1 or 2, wherein determining the first slot(s) comprises:
determining the first slot(s) and available resource of the first slot(s) based on uplink slot(s), uplink symbol(s), flexible slot(s) and flexible symbol(s) indicated by configuration information of Time Division Duplexing (TDD).

5. The method of claim 4, wherein when receiving a first Slot Format Indication (SFI), the method further comprises:
assuming that the first SFI does not affect the determination of the first slot(s) by the first terminal; and/or
not expecting that the first SFI changes the determination of the first slot(s) by the first terminal; and/or
in a case that the first SFI indicates flexible symbol(s) are updated to downlink symbol(s) and if uplink symbol(s) after updating and/or flexible symbol(s) after updating cannot meet PUSCH transmission or PUSCH repetition transmission, counting in one repetition transmission for a corresponding first slot, and not performing PUSCH transmission or PUSCH repetition transmission on the corresponding first slot; and/or
in a case that the first SFI indicates flexible symbol(s) are updated to downlink symbol(s) and if the uplink symbol(s) after updating and/or the flexible symbol(s) after updating cannot meet PUSCH transmission PUSCH repetition transmission, performing PUSCH transmission or PUSCH repetition transmission only on a part of resource.

6. The method of claim 1 or 2, wherein determining the first slot(s) comprises:
determining the first slot(s) and available resource of the first slot(s) based on uplink slot(s) and uplink symbol(s) indicated by configuration information of Time Division Duplexing (TDD) and a second Slot Format Indication (SFI); or
determining the first slot(s) and available resource of the first slot(s) based on uplink slot(s), uplink symbol(s), flexible slot(s) and flexible symbol(s) indicated by configuration information of TDD and a second SFI, wherein
the second SFI represents a last SFI received by the first terminal before receiving first Downlink Control Information (DCI), wherein the first DCI is used for indicating PUSCH transmission or PUSCH repetition transmission.

7. The method of claim 6, further comprising:
in a case that the first terminal receives a third SFI after receiving the second SFI,
assuming that the third SFI does not change the determination of the first slot(s) by the first terminal; and/or
not expecting that the third SFI changes the determination of the first slot(s) by the first terminal.

8. The method of claim 7, further comprising:
in a case that the first slot(s) and the available resource of the first slot(s) are determined based on the uplink slot(s) and the uplink symbol(s) in the uplink slot(s) indicated in the configuration information of the TDD and the second SFI, not updating uplink symbol(s) indicated by the second SFI to flexible symbol(s) or downlink symbol(s).

9. The method of claim 6, further comprising:
in a case that a third SFI indicates that uplink symbol(s) indicated by the second SFI is updated to flexible symbol(s) or downlink symbol(s) and if the uplink symbol(s) after updating and/or the flexible symbol(s) after updating cannot meet PUSCH transmission or PUSCH repetition transmission,
not performing PUSCH transmission or PUSCH repetition transmission on a corresponding first slot, and counting in one repetition transmission for the corresponding first slot; or
performing the PUSCH transmission or the PUSCH repetition transmission only on a part of resource.

10. The method of claim 1, further comprising:
in a case that a first cancellation indication (CI) is received when performing the PUSCH transmission or the PUSCH repetition transmission based on the determined first slot(s),
cancelling corresponding PUSCH transmission or corresponding PUSCH repetition transmission, and counting in one repetition transmission for corresponding PUSCH transmission or corresponding PUSCH repetition transmission; or
performing PUSCH transmission or PUSCH repetition transmission only on a part of resource,
wherein cancelled resource indicated by the first CI overlaps with corresponding PUSCH transmission or corresponding PUSCH repetition transmission, or overlaps with slot(s) of corresponding PUSCH transmission or corresponding PUSCH repetition transmission.

11. The method of claim 10, wherein cancelled symbols indicated by the first CI comprises a first symbol, a second symbol and symbol(s) between the first symbol and the second symbol, wherein the first symbol represents a last symbol of received Physical Downlink Control Channel (PDCCH) carrying the first CI, and the second symbol represents a first symbol after elapsing a processing delay and a time offset.

12. The method of claim 10, wherein Physical Downlink Control Channel (PDCCH) carrying the first CI does not need to be sent before first Downlink Control Information (DCI) or PDCCH carrying the first CI does not need to be received by the first terminal before first DCI, wherein the first DCI is used for indicating PUSCH transmission or PUSCH repetition transmission.

13. The method of claim 1, wherein a priority of PUSCH transmission or PUSCH repetition transmission is a high priority, and when the first slot(s) is determined, the method further comprises:
determining a third symbol, a fourth symbol and/or a fifth symbol as available symbol(s), wherein
the third symbol represents a symbol in which a Sounding Reference Signal (SRS) can be configured or is configured, the fourth symbol represents a symbol indicated for PUSCH transmission or PUSCH repetition transmission and a network side triggers the first terminal to send an aperiodic SRS on the fourth symbol, and the fifth symbol represents a symbol indicated for PUSCH transmission or PUSCH repetition transmission and a transmission of a periodic and/or a semi-persistent SRS on the fifth symbol overlaps with corresponding PUSCH transmission or corresponding PUSCH repetition transmission.

14. The method of claim 1, wherein a priority of PUSCH transmission or PUSCH repetition transmission is a low priority, and the method further comprises:
when a network side triggers the first terminal to send an aperiodic Sounding Reference Signal (SRS), and a symbol for sending the aperiodic SRS overlaps with a symbol indicated for PUSCH transmission or PUSCH repetition transmission,
cancelling corresponding PUSCH transmission or corresponding PUSCH repetition transmission, and counting in one repetition transmission for corresponding PUSCH transmission or corresponding PUSCH repetition transmission; or
performing PUSCH transmission or PUSCH repetition transmission only on a part of resource;
or
when a transmission of a periodic SRS overlaps with corresponding PUSCH transmission or corresponding PUSCH repetition transmission, performing corresponding PUSCH transmission or corresponding PUSCH repetition transmission.

15. The method of claim 1, wherein a priority of PUSCH transmission or PUSCH repetition transmission is a low priority, and when the first slot(s) is determined, the method further comprises:
determining a sixth symbol as an available symbol, wherein
the sixth symbol represents a symbol in which a semi-persistent Sounding Reference Signal (SRS) is configured and is not activated.

16. The method of claim 15, further comprising:
in a case that the semi-persistent SRS is activated when PUSCH transmission or PUSCH repetition transmission is performed on the sixth symbol,
cancelling corresponding PUSCH transmission or corresponding PUSCH repetition transmission, and counting in one repetition transmission for corresponding PUSCH transmission or corresponding PUSCH repetition transmission; or
performing PUSCH transmission or PUSCH repetition transmission only on a part of resource.

17. An apparatus for uplink transmission, comprising:
a first determination unit, configured to determine first slot(s), wherein
each first slot represents an available slot for Physical Uplink Shared Channel (PUSCH) transmission or PUSCH repetition transmission, and a number of available symbol(s) of the first slot is greater than or equal to a number of symbol(s) indicated for each PUSCH transmission or each PUSCH repetition transmission.

18. A first terminal, comprising: a first processor and a first communication interface, wherein
the first processor is configured to determine first slot(s), wherein
each first slot represents an available slot for Physical Uplink Shared Channel (PUSCH) transmission or PUSCH repetition transmission, and a number of available symbol(s) of the first slot is greater than or equal to a number of symbol(s) indicated for each PUSCH transmission or each PUSCH repetition transmission.

19. A first terminal, comprising a first processor and a first memory for storing a computer program capable of running on a processor,
wherein the first processor is configured to perform operations of the method of claim 1 to 16 when running the computer program.

20. A storage medium storing a computer program, wherein when the computer program is executed by a processor, operations of the method of any one of claims 1 to 16 are implemented.
